# EUROPEAN PATENT APPLICATION

(11) **EP 4 545 825 A1**
(43) Date of publication of application: **30.04.2025**
(21) Application number: 23854517.2
(22) Date of filing: 18.08.2023
(51) Int. Cl.: F16K 11/02

(54) **DISTRIBUTION VALVE HAVING EXTERNAL PRESSURE RELIEF WATERWAY, AND TOILET FLUSHING SYSTEM AND TOILET**

(30) Priority: 18.08.2022 CN 202210992643
(71) Applicant: Quanzhou Komoo Intelligent Kitchen & Bath Co., Ltd, Quanzhou, Fujian 362300 (CN)
(72) Inventor: LIN, Xiaofa, Xiamen, Fujian 361008 (CN); LIN, Xiaoshan, Xiamen, Fujian 361008 (CN); LIU, Zuhua, Xiamen, Fujian 361008 (CN); LIN, Shan, Xiamen, Fujian 361008 (CN); XU, Yanxin, Xiamen, Fujian 361008 (CN)
(74) Representative: HGF
(86) International application number: PCT/CN2023/113713
(87) International publication number: WO 2024/037620

(57) **Abstract**

Disclosed is a distribution valve having an external pressure relief waterway. The distribution valve comprises a valve body (10), a switching component (40) arranged in the valve body (10), and a driving mechanism used for driving the switching component(40) to act, wherein the valve body (10) is provided with a water inlet (101), a first water outlet (102) and a second water outlet (103); the switching component (40) is slidably connected in the valve body (10) by means of water pressure, and is used for controlling the first water outlet (102) and the second water outlet (103) to be in communication with the water inlet (101); a pressure relief waterway (70) is provided in the valve body (10); and a pressure relief port (701) of the pressure relief waterway (70) directly discharges water to the outside of the valve body (10), thereby avoiding a slow switching speed or even switching function failure caused by a small pressure difference between pressed faces on the switching component due to the occurrence of a state in which a rim flushing waterway, a jet waterway and a pressure relief waterway are in communication when a pressure relief hole is opened for waterway switching. Further disclosed are a toilet flushing system using the distribution valve, and a toilet.

## Description

This application is based on a Chinese Patent Application No. 202210992643.3 filed to CNIPA on August 18, 2022 and entitled "Distribution Valve Having External Pressure Relief Waterway", and claims the priority thereof, the disclosure of which is hereby incorporated into this application text in its entirety.

### Technical Field

The invention relates to the technical field of waterway switching control, in particular to a distribution valve with an external pressure relief waterway, and a toilet flushing system and a toilet.

### Background

Common water pressure on-off valves on the market usually focus on single-function waterway opening and closing. During the application process, the valve body is opened and closed through pressure switching. The structure and function of these valves are relatively single. It cannot well meet the needs of more waterway expansion functions. If multiple waterway functions are required, it is needed to match and increase the number of corresponding valve bodies, which is inconvenient to apply and takes up space.

Waterway switching valves driven by water pressure are common on the market, for the pressure relief design of a back pressure chamber, the back pressure chamber usually connects with the water outlet, to drain a water flow generated during a pressure relief process. This scheme is feasible in single-function valve body opening and closing control, but the one-in multi-out switching valve used for self-made hydraulic control has some functional defects. After the pressure relief is started, there will be a state of communication between multiple outlet waterways and a pressure relief waterway. At this time, a difference between pressures on the stressed surfaces of the switching valve core is small, and the pressure difference of the cavity is small, thus affecting the distribution switching of the waterways, resulting in slow switching speed and even failure of the switching function, and its switching stability is poor.

Therefore, improving the stability of hydraulic switching of multi-way switching valve during hydraulic control is one of the directions to improve and explore the greater value of hydraulic control valve.

### Summary

In view of the shortcomings of the prior art, an object of the present invention is to provide a distribution valve with an external pressure relief waterway, a toilet flushing system, and a toilet.

In order to achieve the above object, the present invention provides the following technical solutions.

A distribution valve with an external pressure relief waterway includes a valve body, a switching component provided in the valve body, and a driving mechanism for actuating the switching component. The valve body is provided with a water inlet, a first water outlet and a second water outlet. The switching component is slidably connected in the valve body by water pressure, and the switching component is used for controlling the first water outlet and the second water outlet to communicate with the water inlet respectively. The driving mechanism or the valve body is provided with a pressure relief waterway, and the pressure relief port of the pressure relief waterway directly discharges water to the outside of the valve body, so as to prevent the pressure relief port from communicating with the first water outlet and the second water outlet.

Further, the switching component includes an upper water stop diaphragm, a lower water stop diaphragm and a sliding rod. The upper water stop diaphragm is sleeved at one end of the sliding rod. The lower water stop diaphragm is sleeved at the other end of the sliding rod. The upper water stop diaphragm divides the valve body into a water inlet chamber and a back pressure chamber. The back pressure chamber is provided with a pressure relief hole. The pressure relief hole is controlled by the driving mechanism to open or close, and the pressure relief hole is communicated with the pressure relief waterway in an open state. The water inlet chamber includes a first cavity and a second cavity. The first cavity is communicated with the water inlet. The second cavity is communicated with the second water outlet. The upper water stop diaphragm is provided with a small water hole communicating with the first cavity and the back pressure chamber. The second cavity is provided with a first opening for communicating with the first cavity, and the first opening is controlled to open and close by the upper water stop diaphragm. The sliding rod slidably penetrates the second cavity, and a part of the sliding rod sealingly extends out of the second cavity and enters the first cavity. The first cavity is provided with a second opening for communicating with the first water outlet, and the second opening is controlled to open and close by the lower water stop diaphragm.

Further, when the pressure relief hole is closed, the water inlet communicates with the first water outlet. When the pressure relief hole is opened, the water inlet is communicated with the second water outlet.

Further, a fixing frame is provided at one end of the sliding rod and configured for engaging the upper water stop diaphragm. A hollow small water column is provided at a position of the fixing frame corresponding to the small water hole. The hollow small water column passes through the small water hole.

Further, the other end of the sliding rod passes through the second opening, and the lower water stop diaphragm is located outside the second opening.

Further, a sealing ring is sleeved on the sliding rod, and the sealing ring is sealingly fitted with the second cavity when the sliding rod extends out of the second cavity.

Further, the radial cross section of the sealing ring is V-shaped.

Further, the driving mechanism is a solenoid valve head or a mechanical switch.

Further, the mechanical switch includes a fixed bracket, a press rod, a transmission rod and a return spring. The press rod is hinged with one end of the transmission rod for controlling the movement of the transmission rod. The fixed bracket is fixed to the valve body. The fixed bracket has an inner cavity. The other end of the transmission rod is arranged in the inner cavity and is connected with a plug for opening and closing the pressure relief hole by a connecting block. The return spring is sleeved outside the transmission rod and positioned in the inner cavity outside the connecting block for resetting the plug.

Further, the solenoid valve head includes a fixed bracket, and the fixed bracket is fixed to the valve body. A coil assembly is arranged in the fixed bracket. A movable iron core is movably arranged in the coil assembly, and a plug for opening and closing the pressure relief hole is provided at one end of the movable iron core. A return spring is sleeved outside the movable iron core and used for providing the reset of the movable iron core.

The present invention further provides a toilet flushing system, which includes a pumped water inlet pipe, a jet pipeline, a rim flushing pipeline, and the distribution valve with an external pressure relief waterway as described above. The water inlet is connected with the pumped water inlet pipe, the water inlet is connected with the pumped water inlet pipe, the first water outlet is connected with the rim flushing pipeline, and the second water outlet is connected with the jet pipeline.

The present invention further provides a toilet, including a toilet bowl, and further including a toilet flushing system as described above. The rim flushing pipeline is communicated with a rim flushing hole or a rim flushing nozzle arranged at the top of the toilet bowl. The jet pipeline is communicated with a jet port or a jet nozzle arranged at the bottom of the toilet bowl. The beneficial effects of the present invention are as follows.

The present invention provides a distribution valve with an external pressure relief waterway, which can realize the waterway switching function of one inlet and two outlets by configuring only one driving mechanism, and realizes the communication of the water inlet with the first water outlet and the second water outlet respectively by sliding of the switching component, so as to realize the waterway switching. At the same time, the pressure relief port of the pressure relief waterway directly discharges water to the outside of the valve body, so as to avoid the occurrence of a state in which the rim flushing waterway, the jet waterway and the pressure relief waterway are communicated when the pressure relief hole is opened to carry out waterway switching, which causes the slow switching speed or even the failure of the switching function due to the small difference between pressures on the stressed surfaces of the switching component.

The present invention provides a distribution valve with an external pressure relief waterway, which adopts a pilot valve structure, utilizes the pressure difference on both sides of an upper water stop diaphragm to drive a sliding rod to move up and down, and further realizes the communication of a water inlet with a first water outlet and a second water outlet respectively. It has good structural reliability and the operation is more labor-saving. In addition, a sealing ring is sleeved outside the sliding rod, so that the sliding rod can slide up and down to realize waterway switching while avoiding communication between the second cavity and the first water outlet.

The present invention provides a distribution valve with an external pressure relief waterway, a toilet flushing system and a toilet. The driving mechanism can select a solenoid valve head or a mechanical switch according to the actual situation, and has a wide application range.

### Brief Description of Drawings

In order to more clearly explain the embodiments of the invention or the technical solutions in the prior art, the drawings that need to be used in the description of the embodiments or the prior art will be briefly introduced below, and it is apparent that the drawings in the following description are only some embodiments of the invention, and for those of ordinary skill in the art, other drawings can be obtained according to the drawings without paying creative labor.
FIG. 1 is an exploded view of a distribution valve with an external pressure relief waterway according to the present invention.
FIG. 2 is a schematic diagram of a distribution valve with an external pressure relief waterway according to the present invention.
FIG. 3 is a schematic diagram of a pressure relief port with an external pressure relief waterway according to the present invention.
FIG. 4 is a top view of a distribution valve with an external pressure relief waterway according to the present invention.
FIG. 5 shows a cross-sectional view of FIG. 3 at B-B.
FIG. 6A is a schematic diagram showing the water discharging of a first water outlet of a distribution valve with an external pressure relief waterway according to the present invention.
FIG. 6B is a cross-sectional view of the pressure relief waterway in the state of FIG. 5A (cross-sectional view of FIG. 3 at A-A).
FIG. 7A is a schematic diagram showing the water discharging of a second water outlet of a distribution valve with an external pressure relief waterway according to the present invention.
FIG. 7B is a cross-sectional view of the pressure relief waterway in the state of FIG. 6A (cross-sectional view of FIG. 3 at A-A).
FIG. 8 is an exploded view of a switching component of a distribution valve with an external pressure relief waterway according to the present invention.
FIG. 9 is a cross-sectional view of a switching component of a distribution valve with an external pressure relief waterway according to the present invention.
FIG. 10 is a schematic diagram of a distribution valve with an external pressure relief waterway according to the present invention, with a solenoid valve head used as a driving device.

In the figures, 10 valve body; 101 water inlet; 102 first water outlet; 103 second water outlet; 201 first cavity; 202 second cavity; 301 first opening; 302 second opening; 303 back pressure chamber; 304 pressure relief hole; 40 switching component; 401 sliding rod; 402 fixing frame; 4021 hollow small water column; 403 upper water stop diaphragm; 4031 small water hole; 404 lower water stop diaphragm; 405 sealing ring; 501 mechanical switch; 5011 fixed bracket-I; 5012 press rod; 5013 transmission rod; 5014 return spring-I; 5015 connecting block; 5016 plug-I; 601 solenoid valve head; 6011 fixed bracket-II; 6012 movable iron core; 6013 return spring-II; 6014 plug-II; 70 pressure relief waterway; 701 pressure relief port.

### Detailed Description

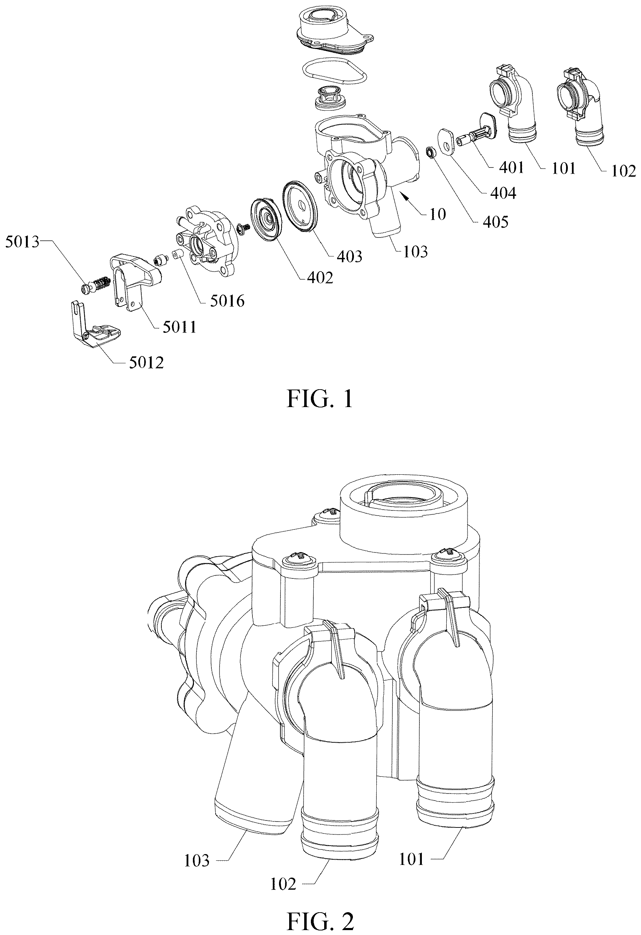

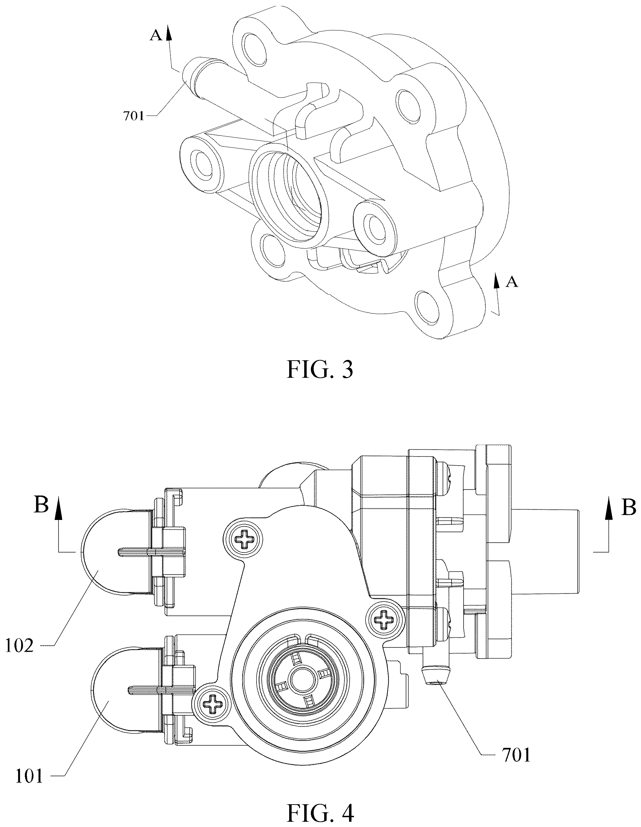

The present invention will be described in detail below with reference to FIGS. 1-10.

A distribution valve with an external pressure relief waterway includes a valve body 10, a switching component 40 disposed in the valve body 10, and a driving mechanism for actuating the switching component 40. The valve body 10 is provided with a water inlet 101, a first water outlet 102, and a second water outlet 103. The switching component 40 is slidably connected to the valve body 10 by water pressure. The switching component 40 is used for controlling the first water outlet 102 and the second water outlet 103 to communicate with the water inlet 101 respectively. The valve body 10 is provided with a pressure relief waterway 70. A pressure relief port 701 of the pressure relief waterway 70 directly discharges water to the outside of the valve body 10, so as to prevent the pressure relief port 701 from communicating with the first water outlet 102 and the second water outlet 103. The valve body 10 is assembled from a plurality of parts. **In** other embodiments, the pressure relief waterway is provided in the driving mechanism.

**In** the present embodiment, the waterway switching function of one inlet and two outlets can be realized by configuring only one driving mechanism. The water inlet 101 is communicated with the first water outlet 102 and the second water outlet 103 respectively by sliding the switching component 40, to realize the waterway switching. At the same time, the pressure relief port 701 of the pressure relief waterway 70 directly discharges water to the outside of the valve body 10, so as to avoid the occurrence of a state where three waterways of the rim flushing waterway, the jet waterway and the pressure relief waterway are communicated when the pressure relief hole 304 is opened for waterway switching, which causes the slow switching speed or even the failure of the switching function due to the small pressure difference among the waterways.

**In** this embodiment, the switching component 40 includes an upper water stop diaphragm 403, a lower water stop diaphragm 404, and a sliding rod 401. The upper water stop diaphragm 403 is sleeved at one end of the sliding rod 401. The lower water stop diaphragm 404 is sleeved at the other end of the sliding rod 401. The upper water stop diaphragm 403 divides the valve body 10 into a water inlet chamber and a back pressure chamber 303. The back pressure chamber 303 is provided with a pressure relief hole 304, which is controlled by the driving mechanism to open or close. The water inlet chamber includes a first cavity 201 and a second cavity 202. The first cavity 201 communicates with the water inlet 101. The second cavity 202 communicates with the second water outlet 103. The upper water stop diaphragm 403 is provided with a small water hole 4031 communicating with the first cavity 201 and the back pressure chamber 303. The second cavity 202 is provided with a first opening 301 for communicating with the first cavity 201, and the first opening 301 is controlled to open and close by the upper water stop diaphragm 403. The sliding rod 401 slidably penetrates the second cavity 202, and a part of the sliding rod 401 sealingly extends out of the second cavity 202 and enters the first cavity 201. The first cavity 201 is provided with a second opening 302 for communicating with the first water outlet 102, and the second opening 302 is controlled to open and close by the lower water stop diaphragm 404.

**In** this embodiment, the pressure difference on both sides of the upper water stop diaphragm 403 is used to drive the sliding rod 401 to move up and down, thereby realizing the communication between the water inlet 101 and the first water outlet 102 and the second water outlet 103, respectively. The structural reliability is good and the operation is more labor-saving. **In** addition, a sealing ring 405 is sleeved outside the sliding rod 401, so that the sliding rod 401 slides up and down to realize waterway switching while avoiding communication between the second cavity 202 and the first water outlet 102. Further, when the pressure relief hole 304 is closed, the water inlet 101 communicates with the first water outlet 102. When the pressure relief hole 304 is opened, the water inlet 101 communicates with the second water outlet 103.

**In** this embodiment, a fixing frame 402 is provided at one end of the sliding rod 401 and configured for engaging the upper water stop diaphragm 403. A hollow small water column 4021 is provided at a position of the fixing frame 402 corresponding to the small water hole 4031. The hollow small water column 4021 passes through the small water hole 4031, which can prevent the small water hole 4031 from deforming and thus affecting the passage of water flow. The other end of the sliding rod 401 passes through the second opening 302, and the lower water stop diaphragm 404 is positioned outside the second opening 302.

In this embodiment, a sealing ring 405 is further sleeved on the sliding rod 401, and the sealing ring 405 is sealingly fitted with the second cavity 202 when the sliding rod 401 penetrates the second cavity 202. Further, the radial cross section of the sealing ring 405 is V-shaped.

In the present embodiment, the driving mechanism is a mechanical switch 501. The mechanical switch 501 includes a fixed bracket-I 5011, a press rod 5012, a transmission rod 5013 and a return spring-I 5014. The press rod 5012 is hinged with one end of the transmission rod 5013 for controlling the movement of the transmission rod 5013. The fixed bracket-I 5011 is fixed to the valve body 10. The fixed bracket-I 5011 has an inner cavity. The other end of the transmission rod 5013 is provided in the inner cavity and is connected with the plug-I 5016 for opening and closing the pressure relief hole 304 through a connecting block 5015. The return spring-I 5014 is sleeved outside the transmission rod 5013 and positioned in the inner cavity outside the connecting block 5015 for returning the plug-I 5016.

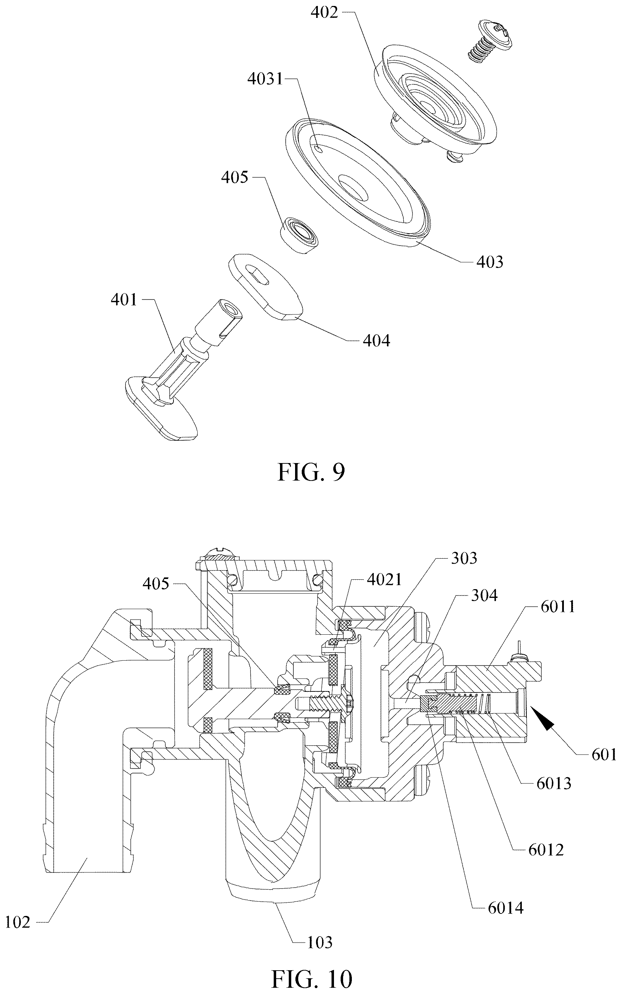

In another embodiment, as shown in FIG. 10, the solenoid valve head 601 includes a fixed bracket-II 6011. The fixed bracket-II 6011 is fixed to the valve body 10. A coil assembly is provided within the fixed bracket-II 6011. The movable iron core 6012 is movably arranged in the coil assembly, and a plug-II 6014 for opening and closing the pressure relief hole 304 is provided at one end of the movable iron core 6012. The return spring-II 6013 is sleeved outside the movable iron core 6012 and used for resetting the movable iron core 6012.

### Example 1

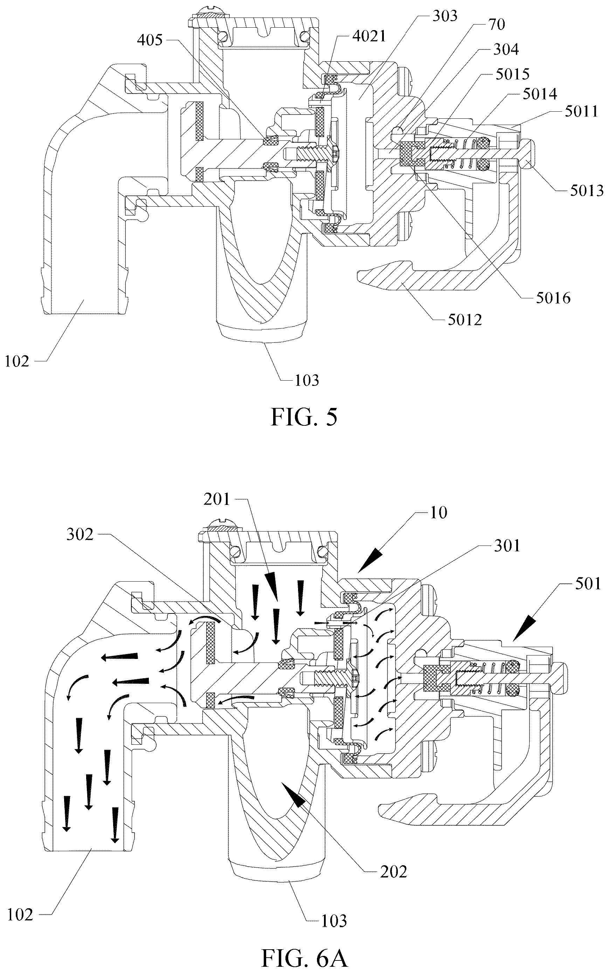

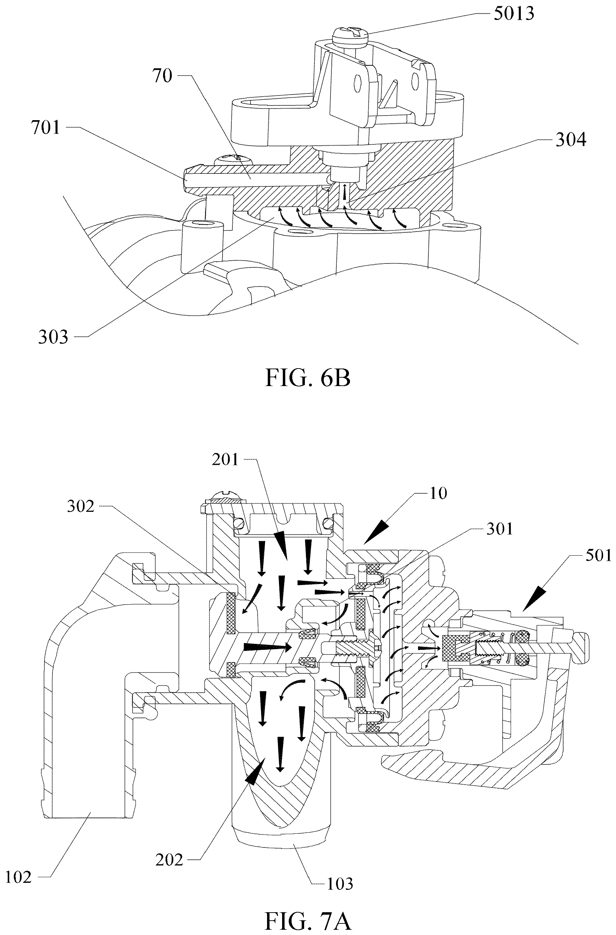

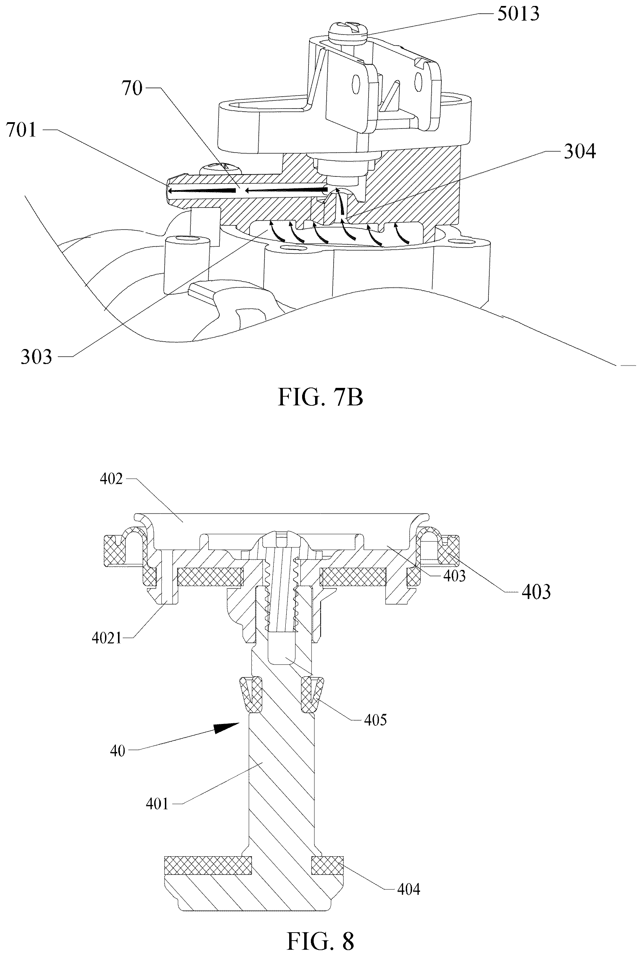

When the driving mechanism adopts the mechanical switch 501, when the press rod 5012 is not pressed, that is, the plug-I 5016 blocks the pressure relief hole 304 under the action of the return spring-I 5014, the external water source enters the valve body 10 through the water inlet 101, and enters the back pressure chamber 303 through the hollow small water column 4021, so that the pressure of the back pressure chamber 303 is greater than that of the water inlet chamber, the sliding rod 401 moves to the left, and the upper water stop diaphragm 403 seals the first opening 301. At the same time, the lower water stop diaphragm 404 opens the second opening 302 so that the water inlet 101 communicates with the first water outlet 102, as shown in FIG. 6A. At this time, because the plug-I 5016 blocks the pressure relief hole 304, the pressure relief waterway 70 is not communicated with the back pressure chamber 303, as shown in FIG. 6B. When the press rod 5012 is pressed, the transmission rod 5013 is lifted, as shown in FIG. 7A, so that the plug-I 5016 opens the pressure relief hole 304, and the pressure relief waterway 70 communicates with the back pressure chamber 303 through the pressure relief hole 304, as shown in FIG. 7B. The pressure relief port 701 discharges water to the outside of the valve body 10, so that the pressure of the water inlet chamber is greater than that of the back pressure chamber 303, and the sliding rod 401 moves to the right, and the lower water stop diaphragm 404 seals the second opening 302. At the same time, the upper water stop diaphragm 403 opens the first opening 301 so that the water inlet 101 communicates with the second water outlet 103.

### Example 2

When the solenoid valve head 601 is used as the driving mechanism, the principle of waterway switching is the same as that of Example 1, except that the mode of driving the plug is different. That is, when the solenoid valve head 601 is not energized, that is, the plug-II 6014 blocks the pressure relief hole 304 under the action of the return spring-II 6013, so that the pressure of the back pressure chamber 303 is greater than that of the water inlet chamber, so that the sliding rod 401 moves to the left, and the upper water stop diaphragm 403 seals the first opening 301. At the same time, the lower water stop diaphragm 404 opens the second opening 302 so that the water inlet 101 and the first water outlet 102 communicate with each other. When the solenoid valve head 601 is energized, the coil assembly adsorbs the movable iron core 6012 to drive the plug-II 6014 to open the pressure relief hole 304, and the pressure relief port 701 of the pressure relief waterway 70 drains water to the outside of the valve body 10, so that the pressure of the water inlet chamber is greater than that of the back pressure chamber 303, so that the sliding rod 401 moves to the right, and the lower water stop diaphragm 404 seals the second opening 302. At the same time, the upper water stop diaphragm 403 opens the first opening 301 so that the water inlet 101 and the second water outlet 103 communicate with each other.

A toilet flushing system of the present invention includes a pumped water inlet pipe, a jet pipeline, a rim flushing pipeline, and a distribution valve with an external pressure relief waterway as described above. The water inlet is connected with the pumped water inlet pipe, the water inlet is connected with the pumped water inlet pipe, the first water outlet is connected with the rim flushing pipeline, and the second water outlet is connected with the jet pipeline. The pumped water inlet pipe can be connected with the water outlet end of the water pump, and the water inlet end of the water pump can be connected with the water tank of the toilet. When the water pump is started, the water pump pumps out the water in the water tank, and discharging the jet water and/or discharging the rim brushing water are realized through the distribution valve.

The present invention further provides a toilet, including a toilet bowl, and further including a toilet flushing system as described above. The rim flushing pipeline is communicated with a rim flushing hole or a rim flushing nozzle arranged at the top of the toilet bowl. The jet pipeline is communicated with a jet port or a jet nozzle arranged at the bottom of the toilet bowl.

The above-described embodiments are merely for illustrating the technical concept and features of the present invention, and the purpose thereof is to enable those skilled in the art to understand the content of the present invention and implement it, and do not limit the scope of protection of the present invention. All equivalent changes or modifications made according to the spirit of the present invention should be covered within the scope of protection of the present invention.

### Industrial Applicability

The present invention provides a distribution valve with an external pressure relief waterway, a toilet flushing system and a toilet. The distribution valve includes a valve body, a switching component arranged in the valve body, and a driving mechanism for driving the switching component to operate. The valve body is provided with a water inlet, a first water outlet and a second water outlet. The switching component is slidably connected to the valve body by water pressure, and the switching component is used for controlling the first water outlet and the second water outlet to communicate with the water inlet respectively. The valve body is provided with a pressure relief waterway, and the pressure relief port of the pressure relief waterway discharges water to the outside of the valve body, so as to avoid the occurrence of a state in which the rim flushing waterway, the jet waterway and the pressure relief waterway are communicated when the pressure relief hole is opened to carry out waterway switching, which causes a slow switching speed or even a failure of the switching function due to the small difference between pressures on the stressed surfaces of the switching component. It has good industrial practicability.

## Claims

1. A distribution valve with an external pressure relief waterway, comprising a valve body, a switching component provided in the valve body, and a driving mechanism for actuating the switching component, wherein the valve body is provided with a water inlet, a first water outlet, and a second water outlet; wherein the switching component is slidably connected in the valve body by water pressure, and the switching component is used for controlling the first water outlet and the second water outlet to be in communication with the water inlet respectively; the driving mechanism or the valve body is provided with a pressure relief waterway, and a pressure relief port of the pressure relief waterway discharges water to the outside of the valve body, so as to prevent the pressure relief port from communicating with the first water outlet and the second water outlet.

2. The distribution valve with an external pressure relief waterway according to claim 1, wherein the switching component comprises an upper water stop diaphragm, a lower water stop diaphragm, and a sliding rod, the upper water stop diaphragm is sleeved at one end of the sliding rod, the lower water stop diaphragm is sleeved at the other end of the sliding rod, the upper water stop diaphragm divides the valve body into a water inlet chamber and a back pressure chamber, the back pressure chamber is provided with a pressure relief hole controlled by the driving mechanism to open or close, and the pressure relief hole communicates with the pressure relief waterway in an open state; the water inlet chamber comprises a first cavity and a second cavity, the first cavity is communicated with the water inlet, the second cavity is communicated with the second water outlet, and the upper water stop diaphragm is provided with a small water hole communicating with the first cavity and the back pressure chamber; the second cavity is provided with a first opening for communicating with the first cavity, and the first opening is controlled to open and close by the upper water stop diaphragm; the sliding rod slidably penetrates the second cavity, and a part of the sliding rod sealingly extends out of the second cavity and enters the first cavity, the first cavity is provided with a second opening for communicating with the first water outlet, and the second opening is controlled to open and close by the lower water stop diaphragm.

3. The distribution valve with an external pressure relief waterway according to claim 2, wherein the water inlet communicates with the first water outlet when the pressure relief hole is closed; and the water inlet is communicated with the second water outlet when the pressure relief hole is opened.

4. The distribution valve with an external pressure relief waterway according to claim 2, wherein a fixing frame is provided at one end of the sliding rod and configured for engaging the upper water stop diaphragm, and a hollow small water column is provided at a position of the fixing frame corresponding to the small water hole, and the hollow small water column passes through the small water hole.

5. The distribution valve with an external pressure relief waterway according to claim 2, wherein the other end of the sliding rod passes through the second opening, and the lower water stop diaphragm is positioned outside the second opening.

6. The distribution valve with an external pressure relief waterway according to claim 2, wherein a sealing ring is further sleeved on the sliding rod and sealingly fits with the second cavity when the sliding rod extends out of the second cavity.

7. The distribution valve with an external pressure relief waterway according to claim 6, wherein a radial cross section of the sealing ring is V-shaped.

8. The distribution valve with an external pressure relief waterway according to any one of claims 2 to 7, wherein the driving mechanism is a solenoid valve head or a mechanical switch.

9. The distribution valve with an external pressure relief waterway according to claim 8, wherein the mechanical switch comprises a fixed bracket, a press rod, a transmission rod and a return spring, and the press rod is hinged with one end of the transmission rod for controlling the movement of the transmission rod; the fixed bracket is fixed to the valve body, the fixed bracket has an inner cavity, the other end of the transmission rod is arranged in the inner cavity and is connected with a plug for opening and closing the pressure relief hole by a connecting block, and the return spring is sleeved outside the transmission rod and positioned in the inner cavity outside the connecting block for resetting the plug.

10. The distribution valve with an external pressure relief waterway according to claim 8, wherein the solenoid valve head comprises a fixed bracket fixed to the valve body; a coil assembly is arranged in the fixed bracket, a movable iron core is movably arranged in the coil assembly, and a plug is provided at one end of the movable iron core and configured for opening and closing the pressure relief hole, and a return spring is sleeved outside the movable iron core and used for providing the reset of the movable iron core.

11. A toilet flushing system comprising a pumped water inlet pipe, a jet pipeline, and a rim flushing pipeline, and further comprising the distribution valve with an external pressure relief waterway according to any one of claims 1 to 10, wherein the water inlet is connected to the pumped water inlet pipe, the first water outlet is connected to the rim flushing pipeline, and the second water outlet is connected to the jet pipeline.

12. A toilet, comprising a toilet bowl, and further comprising the toilet flushing system of claim 11, wherein the rim flushing pipeline communicates with a rim flushing hole or a rim flushing nozzle provided at a top of the toilet bowl, and the jet pipeline communicates with a jet port or a jet nozzle provided at a bottom of the toilet bowl.
